# EUROPEAN PATENT APPLICATION

(11) **EP 0 570 926 A1**
(43) Date of publication of application: **24.11.1993**
(21) Application number: 93108124.4
(22) Date of filing: 18.05.1993
(51) Int. Cl.: C04B 41/87

(54) **Pattern-forming sheet**

(30) Priority: 19.05.1992 JP 152715/92
(71) Applicant: NITTO DENKO CORPORATION, Osaka (JP)
(72) Inventor: Matsuura, Hirotaka, c/o Nitto Denko Corporation, Ibaraki-shi, Osaka (JP); Sakuramoto, Takahumi, c/o Nitto Denko Corporation, Ibaraki-shi, Osaka (JP); Tominaga, Takashi, c/o Nitto Denko Corporation, Ibaraki-shi, Osaka (JP)
(74) Representative: Grünecker, Kinkeldey, Stockmair & Schwanhäusser Anwaltssozietät

(57) **Abstract**

A pattern-forming sheet capable of forming a burned pattern by a burning treatment, comprising a ceramic sheet (2) containing a ceramic powder having formed on one surface thereof a hydrophilic adhesive layer (3).

## Description

### FIELD OF THE INVENTION

The present invention relates to a pattern-forming sheet suitable for forming a burned pattern such as an identification label, etc., onto mainly a wet article.

### BACKGROUND OF THE INVENTION

In changing of a production system to small productions of many kinds of products, it is an important theme to provide labels having excellent durability, heat resistance, etc., which are used for the management of products, half-finished products, various parts, etc., composed of metals, glasses, burned ceramics, etc.

Hitherto, a sheet formed by a glass powder and a resin binder having formed thereon a pattern with an ink containing a glass powder is known as a pattern-forming sheet capable of forming a burned pattern by burning. The pattern-forming sheet has a flexibility and an expedient label-forming property, can fix a burned pattern onto a desired material under a burning treatment, and can form patterns having excellent abrasion resistance, heat resistance, and resistance to chemicals.

Accordingly, use of the pattern-forming sheet of this type can overcome various problems caused by conventional substrate-type labels composed of burned ceramics, metals, a porcelain enamel, etc., such as a problem of lacking in simple fixing property caused by a fixing work such as screwing, etc., a problem of lacking in formation of various kinds of labels necessary for the management, etc., of each part under the production system of small productions of many kinds of products, a problem of lacking in fixing property of patterns on curved surfaces due to the rigidity of substrate-type label, etc.

However, the pattern-forming sheet described above has a poor adhesion to an article in a wet state, such as an unburned pottery, etc., resulting in causing a problem of a poor fixing force by releasing or falling of the burned pattern from the article such as the unburned pottery during burning or by peeling of the burned pattern during burning.

### SUMMARY OF THE INVENTION

Accordingly, an object of the present invention is to provide a pattern-forming sheet capable of effectively fixing by burning even onto mainly a wet article and capable of forming a burned pattern having excellent heat resistance, durability, etc.

That is, according to the present invention, there is provided a pattern-forming sheet capable of forming a burned pattern by a burning treatment, comprising a ceramic sheet containing a ceramic powder having formed on one surface of the sheet a hydrophilic adhesive layer.

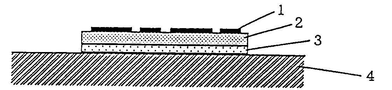

### BRIEF DESCRIPTION OF THE DRAWING

The Figure is a cross sectional view showing an example of the pattern-forming sheet of the present invention.

### DETAILED DESCRIPTION OF THE INVENTION

The present invention is described in detail below.

The pattern-forming sheet of the present invention having the construction described above is soft or flexible, thereby having a good adhesive property to curved surface, and can expediently form thereon a pattern by an appropriate printing system such as heat transfer printing, screen printing, etc. Also, the pattern-forming sheet can be easily temporarily fixed by a sufficient adhesive force even to a wet surface via the hydrophilic adhesive layer. Furthermore, in the case of using the pattern-forming sheet of the present invention, the sheet forms a burned sheet while keeping the applied pattern by a burning treatment and the sheet is strongly fixed even to the article which was in a wet state.

The accompanying drawing is a cross sectional view showing an example of the pattern-forming sheet of the present invention. As shown in the Figure, the pattern-forming sheet comprises a ceramic sheet 2 having formed thereon a pattern layer 1 and a hydrophilic adhesive layer 3 formed on the back surface of the ceramic sheet 2. In addition, numeral 4 is an article onto the surface of which the pattern-forming sheet is fixed.

The ceramic sheet in the pattern-forming sheet of the present invention can be formed by shaping at least one kind of a ceramic powder with a resin binder into a sheet form. The ceramic powder used is a powder of a material which adheres to an article by being softened or melted at a temperature of the melting point or decomposition point or less of the article. In general, a glass powder is used. In particular, a lead glass powder, a borosilicate glass powder, a soda glass powder, etc., which are softened or melted at a temperature of from 400°C to 1,000°C are preferably used.

The ceramic sheet may be compounded with body-forming components other than the ceramic powder. The term "body-forming component" used herein means a component other than the ceramic powder, which remains even after burning and constitutes a body. Such the body-forming component is embedded by the softened or melted ceramic powder at burning the ceramic sheet to form a body. Examples of the body-forming components other than the ceramic powder are a different kind of ceramic having a melting point higher than the burning temperature, and a powder or fibers of a metal or an alloy thereof, or an inorganic material such as the oxides of the metal, etc. The powder having particle sizes of from 0.1 to 20 µm or fibers having a diameter of from 0.1 to 20 µm and a length of 100 µm or less are suitably used in the present invention, although the invention is not limited to them.

The kinds and the combination of the compounding components for the ceramic sheet may be properly determined. From the point of coloring, an inorganic coloring agent such as a pigment or a filler can be suitably used. Examples of the inorganic coloring agent are white materials such as silica, calcium carbonate, titanium oxide, zinc white, zirconia, calcium oxide, alumina, and metal compounds (such as metal carbonates, metal nitrates, and metal sulfates) which become white oxides by oxidation at a temperature of the burning temperature or less.

Examples of the inorganic coloring agent used for the ceramic sheet of the present invention also include red materials including metal ions such as iron ions, copper ions, gold ions, chromium ions, selenium ions, etc., for example, manganese oxide·alumina, chromium oxide·tin oxide, iron oxide, and cadmium sulfide·selenium sulfide; blue materials including metal ions such as manganese ions, cobalt ions, copper ions, iron ions, etc., for example, cobalt oxide, zirconia·vanadium oxide, and chromium oxide·divanadium pentoxide; and black materials including metal ions such as iron ions, copper ions, manganese ions, chromium ions, cobalt ions, etc., for example, chromium oxide·iron oxide·manganese oxide, chromates, and permanganate

Furthermore, examples of the inorganic coloring agent include yellow materials including metal ions such as vanadium ions, tin ions, zirconium ions, chromium ions, titanium ions, antimony ions, etc., for example, zirconium·silicon·praseodymium, vanadium·tin, and chromium·titanium·antimony; green materials including metal ions such as chromium ions, aluminum ions, cobalt ions, calcium ions, etc., for example, chromium oxide, cobalt·chromium, and alumina·chromium; and pink materials including metal ions such as iron ions, silicon ions, zirconium ions, aluminum ions, manganese ions, etc., for example, aluminum·manganese and iron·silicon·zirconium.

The amount of the body-forming component used other than the ceramic powder is 150 parts by weight or less, and preferably from 2 to 45 parts by weight, per 100 parts by weight of the ceramic powder from the points of the abrasion resistance, the durability, the chemical resistance, etc., of the burned layer formed and the adhesion of the burned layer with an article to which the pattern-forming sheet is adhered.

The resin binder used for the pattern-forming sheet of the present invention is a resin which disappears upon thermal decomposition at burning. Examples of such the resin are a hydrocarbon resin, a vinyl resin, a styrene resin, an acetal resin, a butyral resin, an acrylic resin, a polyester resin, an urethane resin, and a cellulose resin. These resins showing good thermal decomposition at burning are preferably used in the present invention and from this point, a hydrocarbon resin, an acetal resin, an acrylic resin, and a cellulose resin are preferable and an acrylic resin is more preferable.

The amount of the resin binder used may be properly determined according to the specific gravity, particle sizes, etc., of the ceramic powder used together. In general, the amount of the resin binder used is from 5 to 10,000 parts by weight, preferably from 105 to 1,500 parts by weight, and more preferably from 200 to 1,000-parts by weight, per 100 parts by weight of the ceramic powder. If the amount of the resin binder is too small, a sheet having a poor shape-retention property is obtained, and on the other hand, if the amount of the resin binder is too large, a sheet which is liable to induce breakage or foaming at burning is obtained.

The ceramic sheet used in the present invention can be formed by a method of mixing at least one kind of a body-forming component and a resin binder using an organic solvent, etc., with a ball mill or the like, and applying the mixed liquid on a supporting substrate such as a separator, etc., by a proper method followed by drying. A method excellent in a layer thickness controlling property, such as a doctor blade method, etc., is preferably used as the applying method of the mixed liquid. It is also preferable to conduct a sufficient defoaming treatment, for example, using a defoaming agent such that bubbles do not remain in the layer formed.

In addition, if necessary, proper additives such as a plasticizer, a dispersant, etc., may be incorporated in the ceramic sheet.

The thickness of the ceramic sheet formed may be properly determined according to the purpose of use and is generally from 10 to 500 µm, and preferably from 30 to 100 µm. If the thickness of the ceramic sheet is too thin, it is difficult to handle the ceramic sheet and if the thickness of too thick, a poor burning to cause foaming in the burned layer is liable to occur.

The ceramic sheet which can be used in the present invention may be formed by laminating two or more sheets each comprising a ceramic powder and a resin binder and in the case of the laminate type ceramic sheet, by combining the sheets each having a different content of the resin binder, the temperature-raising speed at burning can be increased. In this case, the difference in the content of the binder resin is at least 2% by weight, and preferably at least 10% by weight. Also, there is no particular restriction on the ratio of the thicknesses of the sheets but the thickness ratio of, for example, two sheets is preferably in the range of from 1 : 1 to 1 : 100.

Furthermore, other ceramic sheet which can be used in the present invention includes a sheet formed by holding the resin binder layer containing a ceramic powder with an inorganic fiber cloth. The cloth type ceramic sheet is flexible, has a good adhesive property to curved surface and a toughness, and has an improved handling property.

In the present invention, the ceramic sheet is temporarily fixed to an article as it is or as a pattern-forming sheet via the hydrophilic adhesive layer. The pattern-forming sheet may be the ceramic sheet having formed on one surface of the sheet a pattern comprising a heat-resistant ink or may be a form-recognizing type by the external form or an identification type by coloring.

The hydrophilic adhesive layer of the pattern-forming sheet of the present invention is formed such that the layer is burned out at burning. For the formation of the hydrophilic adhesive layer, a water-activation type material which is non-adhesive at normal state but shows an adhesive property in a wet state by moisture absorption, etc., or a pressure-sensitive adhesive material mainly composed of a hydrophilic polymer can be used. Examples of the material are water-soluble polymers and hydrophilic polymers such as polyvinyl alcohol, polyvinyl pyrrolidone, polyacrylamide, an acrylic acid copolymer, polyvinyl methyl ether, etc., compounded with suitable components such as a tackifier (e.g., glycerol, polyethylene glycol, polyether polyol, polyoxyethylene phenol ether, and polyoxyethylene alkylphenyl ether), a crosslinking agent, a filler, etc.

The hydrophilic adhesive layer is formed on the ceramic sheet by a proper method similar to the formation method of an adhesive tape, etc., such as a method of coating a pressure-sensitive adhesive on the ceramic sheet using a proper coating machine, a method of transferring a hydrophilic adhesive layer formed on a separator onto the ceramic sheet, etc.

The thickness of the hydrophilic adhesive layer is usually from 5 to 50 µm, and preferably from 8 to 20 µm. If the thickness of the hydrophilic adhesive layer is too thin, a sufficient adhesive force is not obtained, while if the thickness thereof is too thick, the ceramic sheet is liable to fall and a poor burning is liable to occur.

The heat-resistant ink which is used in the case of forming the pattern on the ceramic sheet is prepared such that the burned product of the heat-resistant ink is fixed to the burned product of the ceramic sheet by the burning treatment. Such a heat-resistant ink is usually prepared as a fluid ink such as a pasty ink, etc., by mixing at least one kind of an inorganic coloring agent using a solvent together with, if necessary, proper additives such as a ceramic powder, a binder, a plasticizer, a dispersant, etc. A typical example of the heat-resistant ink is a pasty ink prepared by mixing, for example, a glass powder and an optional component such as an inorganic pigment, etc., or a colored glass pigment alone together with a binder, and the ink is used for a direct coating method by a screen printing system or a transfer method of transferring a coated pattern formed on a transfer paper in a conventional technique.

The composition of the heat-resistant ink may be properly determined according to the contrast and the fixing property with the burned product of the ceramic sheet. The composition of the ink forming the remained burned pattern by burning usually comprises from 1 to 100% by weight of an inorganic coloring agent and from 99 to 0% by weight of a ceramic powder, in particular a glass powder. The inorganic coloring agent and the ceramic powder which can be used for the preparation of the heat-resistant ink are the same materials described above as used for the ceramic sheet.

The binder which is used, if necessary, for the preparation of the heat-resisting ink is a wax or a resin which is burned out by thermal decomposition at a temperature of the burning temperature or less. The proper amount of the binder used is from 5 to 80% by weight based on the weight of the components forming the burned pattern.

Examples of the wax which can be preferably used as the binder for preparing the heat-resistant ink are paraffin waxes, natural waxes, ester waxes, higher alcohol waxes, higher amide waxes, etc. Examples of the resin which can be used as the binder are the resin binders described above as the materials for forming the ceramic sheet.

If the characteristics such as the heat decomposition temperature, etc., of the binder for the heat-resistant ink are greatly different from the characteristics of the resin binder for the ceramic sheet, a poor appearance such as foaming, deformation, etc., is liable to form in the burned product. From this point, it is preferred that the binder for the heat-resisting ink is the same kind of the resin binder for the ceramic sheet.

The forming method of a pattern on the ceramic sheet with the heat-resistant ink is optional.

That is, a proper pattern-forming method such as a hand writing method, a coating method through a pattern-forming mask, a transfer method of a pattern formed on a transfer paper, a method of forming a patern by a printer of an ink jet type, etc., may be employed for forming the pattern.

The form of the pattern formed is also optional. That is, a desired pattern such as a print pattern, a design pattern, a bar code pattern, a circuit pattern, etc., may be formed. An ink sheet such as a print ribbon necessary in the case of forming a pattern by a printer such as an XY plotter, a wire dot printer, a heat transfer printer, an impact printer, etc., can be prepared by applying a heat-resistant ink to a supporting substrate such as a film, a cloth, etc., by, for example, a coating method, an impregnation method, etc., to hold the ink in the substrate.

The supporting substrate which can be used is a conventional substrate, e.g., a plastic film such as a polyester film, a polyimide film, a fluorine resin film, etc., and a cloth composed of polyamide fibers, polyester fibers, etc.

The pattern-forming method by a printer has an advantage that a proper pattern can be efficiently formed with a good precision.

The step of forming the pattern of a heat-resistant ink on the ceramic sheet may be before or after temporarily fixing the ceramic sheet to an article via the hydrophilic adhesive layer. In the case of forming the pattern on the ceramic sheet by a printer, a method of previously forming the pattern on the ceramic sheet and temporarily fixing the sheet to the article as a pattern-forming sheet is usually employed. In addition, in the case of previously forming the pattern on the ceramic sheet, if necessary, the surface of the ceramic sheet having formed thereon the pattern may be protected by applying thereon a separator, etc., before the ceramic sheet is subjected to a burning treatment. In the case of the transfer method, the transfer paper may be used as the separator without removing the transfer paper.

The burning treatment of the assembly formed by temporarily fixing the ceramic sheet having formed thereon a pattern to an article via the hydrophilic adhesive layer can be conducted under appropriate heating conditions according to the burning temperature for the ceramic sheet or the article. By the burning treatment, the organic components such as the resin binder, the adhesive layer, etc., are disappeared and the ceramic sheet forms a burned product together with the pattern in one body to fix to the article.

The pattern-forming sheet can be used for various purposes of, for example, the formation of an indicator such as an identification label, etc., and the formation of a decoration, etc. There is no particular restriction on the article to which the burned pattern is formed, but the article which can endure the burning temperature of the ceramic sheet is used. Also, an unburned ceramic molding, in particular a wet article such as an unburned pottery, etc., can be used as the article and in this case, the burning treatment for the ceramic molding can be also conducted for the pattern-forming sheet. In addition, the form of the article onto which the pattern is formed may be optional such as a tabular form, a vessel form, etc.

The present invention is explained in more detail by reference to the following examples and comparative example, which should not be construed as limiting the scope of the invention. In those examples and comparative example, all percents, parts, ratios and the like are by weight unless otherwise indicated.

### Example 1

A slurry obtained by uniformly mixing 100 parts of a borosilicate lead glass powder, 20 parts of zirconium oxide, 20 parts of polyisobutyl methacrylate, and 3 parts of dibutyl phthalate using 60 parts of toluene in a ball mill was applied on a substrate (a polyester film) by a doctor blade method and dried to form a ceramic sheet having a thickness of 60 µm. A polyvinyl alcohol adhesive was coated on one surface of the resulting ceramic sheet and dried to form a hydrophilic adhesive layer having a thickness of 10 µm, and a bar code pattern composed of a heat-resistant ink was then printed on the other surface of the ceramic sheet to obtain a pattern-forming sheet.

The heat-resistant ink used was prepared by mixing 20 parts of a chromium oxide·iron oxide·cobalt oxide-type black pigment and 10 parts of polyisobutyl methacrylate using 20 parts of toluene.

### Example 2

The same procedure as in Example 1 was followed except that a hydrophilic adhesive layer was formed using a cellulose adhesive in place of the polyvinyl alcohol adhesive to obtain a pattern-forming sheet.

### Comparative Example

The same procedure as in the Example 1 was followed except that a hydrophobic adhesive layer was formed using an acrylic adhesive mainly composed of an acrylic acid ester wherein the average carbon atom number of the alkyl moiety was 8 in place of the polyvinyl alcohol adhesive to obtain a pattern-forming sheet.

### Evaluation Test

Each of the pattern-forming sheets obtained in Examples 1 and 2 and the Comparative Example described above was temporarily fixed to an unburned pottery plate having a water content of 5% by weight via the adhesive layer and after raising the temperature to 1,300°C over a period of 15 hours, the pottery plate was burned in air at the same temperature for one hour.

After cooling each burned product thus obtained, the burned product was took out of the heating furnace, and the appearance of the bar code pattern in each burned pattern and the fixed state of each burned pattern to the burned pottery plate were examined.

The results obtained are shown in Table 1 below.

**Table 1**

| | Appearance | Fixed State |
|---|---|---|
| Example 1 | Good | Good |
| Example 2 | Good | Good |
| Comparative Example | Strain, scratch, and peeling occurred in the bar code. | Partially released. |

### Example 3

A mixture prepared by mixing 100 parts of polyisobutylene methacrylate, 20 parts of a zirconium frit powder, 4 parts of a zirconium oxide powder, 10 parts of benzylbutyl phthalate, and 200 parts of toluene in a ball mill was applied on a substrate (a polyester film) by a doctor blade method and dried to form a ceramic sheet having a thickness of 50 µm. A hydrophilic adhesive layer having a thickness of 10 µm composed of an acrylic acid copolymer adhesive was formed on one surface of the sheet, and a bar code pattern composed of a heat-resistant ink was then printed on the other surface of the sheet to provide a pattern-forming sheet.

The heat-resistant ink used was prepared by mixing 20 parts of a chromium oxide·iron oxide·cobalt oxide black pigment and 10 parts of polyisobutyl methacrylate using 20 parts of toluene.

### Evaluation Test

The pattern-forming sheet obtained in Example 3 was temporarily fixed to an unburned pottery plate having a water content of 20% by weight followed by drying, and after raising the temperature to 1,300°C over a period of 15 hours, the pottery plate was burned in air at the same temperature for one hour.

After cooling the burned product, the burned product was took out of the heating furnace, and the appearance of the bar code pattern in the burned pattern and the fixed state of the burned pattern to the burned pottery plate were examined.

The results obtained are shown in Table 2 below.

**Table 2**

| | Appearance | Fixed State |
|---|---|---|
| Example 3 | Good | Good |

### Example 4

A slurry prepared by uniformly mixing 80 parts of a glass powder mainly composed of PbO, SiO₂, B₂O₃, and Al₂O₃, 20 parts of a titania powder having a mean particle size of 0.5 µm, 30 parts of an acrylic resin binder, and 2 parts of dibutyl phthalate using 50 parts of toluene in a ball mill was applied on a polyester film treated with a releasing agent by a doctor blade method and dried to form a layer having a thickness of about 40 µm.

On the other hand, by following the same procedure as above using 25 parts of the acrylic resin binder, a layer having a thickness of about 30 µm was formed. This layer was laminated on the layer obtained above at about 90°C, and the polyester film was then separated to obtain a pattern-forming sheet having a thickness of about 70 µm.

A hydrophilic acrylic adhesive layer having a thickness of about 20 µm formed on a separator was adhered to the above-obtained pattern-forming sheet at the layer side containing a larger amount of the acrylic resin binder, and a bar code pattern composed of a heat-resistant ink was formed on the other surface of the pattern-forming sheet using a heat transfer type printer and an ink sheet to obtain a label for burning.

The ink sheet used above was prepared by coating a heat-resistant ink composed of a mixed past of 25 parts of a chromium oxide·iron oxide·cobalt oxide black pigment, 25 parts of paraffin wax, and 50 parts of toluene on a polyester film and drying.

### Evaluation Test

The burning label obtained in Example 4 was temporarily fixed to a glass plate via the adhesive layer and after raising the temperature to 600°C at a temperature raising speed of 20°C, burned in air at the same temperature for 30 minutes. The organic components such as the acrylic resin binder, etc., were burned out by burning.

In Example 4, a glass plate having strongly fixed thereon the burned label having a black bar code pattern on a white background in a clear state without having cracks, bubbles, shrinkage, etc., was obtained.

### Example 5

A paste was obtained by uniformly mixing 90 parts of a borosilicate lead glass powder, 10 parts of a titania powder, 20 parts of polyisobutyl methacrylate, 1 part of stearic acid, 2 parts of dibutyl phthalate, and 45 parts of toluene in a ball mill. A glass fiber cloth having a weight of 48 g/m² and a thickness of 60 µm was immersed in the paste and impregnated with the paste followed by drying to form a sheet having a thickness of 70 µm. A hydrophilic acrylic adhesive layer having a thickness of 15 µm was formed on one surface of the sheet to obtain a pattern-forming sheet.

A bar code pattern composed of a heat-resistant ink was formed on the surface of the organic binder layer of the above-obtained pattern-forming sheet using a heat transfer type printer and an ink sheet to obtain a label for burning.

The ink sheet used above was prepared by coating a heat-resistant ink composed of a mixed paste of 20 parts of a chromium oxide·iron oxide·cobalt oxide black pigment, 20 parts of paraffin wax, and 60 parts of toluene on a polyester film and drying.

The burning label obtained above was temporarily fixed to a glass plate via the adhesive layer and after raising the temperature to 550°C at a temperature-raising speed of 10°C/minute, burned in air at the same temperature for 20 minutes. The organic components such as polyisobutyl methacrylate and the acrylic hydrophilic adhesive layer were burned out by burning.

In Example 4, a glass plate having strongly fixed thereto the burned label having a black bar code pattern on a white background in a clear state without having cracks, bubbles, shrinkage, etc., was obtained.

As described above, the pattern-forming sheet of the present invention can be subjected to a burning treament in a state of temporarily fixing to an article in a wet state, the burned pattern can be fixed to an article by burning in a state of keeping well the pattern applied without causing peeling or lifting, and the burned pattern excellent in the adhesion and the fixed state with an article and also excellent in heat resistance, durability, etc., can be formed.

While the invention has been described in detail and with reference to specific embodiments thereof, it will be apparent to one skilled in the art that various changes and modifications can be made therein without departing from the spirits and scope thereof.

## Claims

1. A pattern-forming sheet capable of forming a burned pattern by a burning treatment, comprising a ceramic sheet containing a ceramic powder having formed on one surface thereof a hydrophilic adhesive layer.

2. The pattern-forming sheet of claim 1, wherein the ceramic sheet containing a ceramic powder comprises the ceramic powder and a resin binder.

3. The pattern-forming sheet of claim 2, wherein the resin binder is used in an amount of from 5 to 10,000 parts by weight per 100 parts by weight of the ceramic powder.

4. The pattern-forming sheet of claim 3, wherein the amount of the resin binder is from 105 to 1,500 parts by weight per 100 parts by weight of the ceramic powder.

5. The pattern-forming sheet of claim 4, wherein the amount of the resin binder is from 200 to 1,000 parts by weight per 100 parts by weight of the ceramic powder.

6. The pattern-forming sheet of claim 1, wherein the ceramic sheet containing the ceramic powder is a laminate of at least two sheets each comprising the ceramic powder and a resin binder.

7. The pattern-forming sheet of claim 1, wherein the ceramic sheet containing the ceramic powder is an inorganic fiber cloth which holds a resin binder layer containing the ceramic powder thereon.
